# EUROPÄISCHE PATENTSCHRIFT

(11) **EP 1 205 596 B1**
(45) Veröffentlichungstag und Bekanntmachung des Hinweises auf die Patenterteilung: **22.02.2006**
(21) Anmeldenummer: 01124071.0
(22) Anmeldetag: 10.10.2001
(51) Int. Cl.: D21B 1/32

(54) **Verfahren zur Aufbereitung von störstoffhaltigem Altpapier**
Process for treating waste paper containing impureties
Procédé de traitement de vieux papiers contenant des impurités

(30) Priorität: 14.11.2000 DE 10056273
(43) Veröffentlichungstag der Anmeldung: 15.05.2002
(73) Patentinhaber: Voith Paper Patent GmbH, 89522 Heidenheim (DE)
(72) Erfinder: Gommel, Axel, 88214 Ravensburg (DE); Müller, Wolfgang, 88250 Weingarten (DE); Kemper, Martin, 88250 Weingarten (DE); Schabel, Samuel, Dr., 88212 Ravensburg (DE); Sigl, Ronald, 88263 Horgenzell (DE)

(56) Entgegenhaltungen:
- EP-A- 0 486 904
- EP-A- 0 732 442

## Beschreibung

Die Erfindung betrifft ein Verfahren zur Aufbereitung von störstoffhaltigem Altpapier.

Bei den bekannten Verfahren zur Auflösung von Altpapier werden zumeist Stofflöser, Auflösetrommeln oder Kombinationen von beiden verwendet. Dabei und in den nachfolgenden Aufbereitungsaggregaten wird der Stoff in mehreren Schritten von Störstoffen gereinigt, wozu fast immer ein beträchtlicher Aufwand erforderlich ist, insbesondere, da die Störstoffe zu Anfang grob sind und sich nur schwer handhaben lassen.

Aus der EP 0 732 442 A2 ist ein Verfahren zur Behandlung von Altpapier bekannt, bei dem das Altpapier nach dem Auflösen in einer Trommel zunächst fraktioniert wird. Dadurch können leichter auflösbare Bestandteile frühzeitig abgetrennt und separat aufbereitet werden. Die Grobfraktion wird zerkleinert, wozu z.B. Stofflöser, Trommel, Kneter, Zerfaserer oder Disperger vorgeschlagen werden. In einer sich anschließenden Sortierung können Störstoffe abgeschieden werden.

In manchen Fällen werden solche Verfahren dahingehend verändert, dass der Altpapierstoff nicht direkt in den Stofflöser oder die Auflösetrommel eingetragen wird, sondern dass das angelieferte Altpapier zunächst in einem Shredder vorzerkleinert wird. Diese Vorzerkleinerung findet dann bei einem Feststoffgehalt des Altpapiers statt, der etwa dem des lufttrockenen Anlieferungszustandes, also etwa 85 bis 97 %, entspricht. Danach lässt sich durch aufwendige Trennstufen noch vor dem Stofflöser ein Teil der Störstoffe entfernen.

Ein Verfahren, bei dem das in Ballen vorliegende Altpapier zunächst aufgebrochen und dann die lufttrockenen Ballenbruchstücke in einen Shredder eingetragen werden, zeigt die WO 96/36763. Bei diesem Verfahren dient der Shredder dazu, das angelieferte Altpapier so weit zu zerteilen, dass anschließend eine Trockensortierung, z.B. durch Windsichtung möglich ist, um unerwünschte Störstoffe abzutrennen. Solche Verfahren sind im apparativen Aufbau aufwendig und haben außerdem einen hohen Energiebedarf.

Der Erfindung liegt die Aufgabe zu Grunde, ein neues Verfahren zu finden, mit dem es möglich ist, die genannten Rohstoffe so aufzulösen, dass möglichst wenig mechanische möglich ist, die genannten Rohstoffe so aufzulösen, dass möglichst wenig mechanische Energie benötigt wird. Das Verfahren soll außerdem den apparativen Aufwand, der zur Herstellung einer sauberen Papierfasersuspension nötig ist, reduzieren.

Diese Aufgabe wird durch die im Anspruch1 beschriebenen Verfahrensschritte 1.1 bis 1.5 vollständig gelöst.

Die Abfolge der in Anspruch 1 genannten Verfahrensschritte führt dazu, dass das angelieferte Material zunächst mit Wasser durchtränkt und vorzugsweise bei relativ hoher Konsistenz aufgelöst wird, bis sich ein breiartiger Feststoff gebildet hat. Der nachfolgende Verfahrensschritt wird dann in einem weiteren Apparat durchgeführt und beinhaltet eine Zerkleinerung und Kalibrierung, und zwar in der Weise, dass auch die enthaltenen Störstoffe so weit zerkleinert sind, dass sie in einer pumpfähigen Suspension problemlos mitgeführt werden können. Insbesondere werden Störstoffe, die zu Verspinnungen neigen, gekürzt. Dieser Schritt findet unter besonders vorteilhaften Bedingungen statt, da der aufgelöste Faserstoff schnell durch ein kalibrierendes Sieb abfließen kann, die mechanische Zerkleinerungsarbeit also größtenteils an den länger zurückgehaltenen Störstoffen verrichtet wird. Eine aus dem so behandelten Stoff gebildete Suspension ist gut zu handhaben und im Feinsortierer problemlos zu reinigen. Dieser kann schon relativ kleine Sieblöcher, wie z.B. 2 bis 4 mm aufweisen. Oder es wird ein Schlitzsortierer mit Schlitzweiten unter 2 mm, vorzugsweise ca. 1 mm verwendet. Auch die Zerkleinerungswirkung an den Störstoffen selbst kann kalibrierend wirken, indem die Störstoffe nur so lange erfasst und zerkleinert werden, bis sie eine bestimmte Größe unterschreiten. Die unerwünschte Zerkleinerung von Störstoffen unter die Sortierbarkeitsgrenze wird also großenteils vermieden. Hierbei ist z.B. an die Verwendung eines Shredders gedacht, der hier aber nicht in der üblichen, bereits erwähnten Weise für lufttrockenes Altpapier eingesetzt wird, sondern eben bei einem bereits aufgelösten hochkonsistenten Faserstoff.

In besonderen Ausführungsformen kann der genannte breiartige Feststoff vor Eintrag oder zu Beginn der Behandlung in der Zerkleinerungsapparatur von den gröbsten Störstoffen gereinigt werden. Grundsätzlich sind zu diesem Zweck eine Mehrzahl von Apparaturen bekannt, wie z.B. Metalldetektoren oder ballistische Trennapparate. Hier sind Aufwand und Nutzen gegeneinander abzuwägen. Eine Abtrennung grober Fremdstoffe kann auch im Zerkleinerungsapparat selbst erfolgen, z.B. in geeigneten Fangtaschen.

Vorzugsweise erzeugt der im erfindungsgemäßen Verfahren angewandte Zerkleinerungs- und Kalibrierungsschritt trotz geringen Energieaufwandes einen Faserstoff, der bereits unmittelbar danach - nach entsprechender Verdünnung - sehr gut zu handhaben ist, da keine Teilchen mehr enthalten sind, die eine durch das Kalibrieren festgelegte Größe überschreiten. Diese Suspension kann daher gleich in einer Feinsortierung weiter bearbeitet werden.

Die Erfindung und ihre Vorteile werden erläutert und beschrieben an Hand von Zeichnungen. Dabei zeigen:
- Fig. 1: Schema zur Durchführung des erfindungsgemäßen Verfahrens;
- Fig. 2: schematisch: Besondere Ausgestaltung einer Zerkleinerungsapparatur;
- Fig. 3: schematisch: Geschnittene Seitenansicht einer weiteren für das Verfahren verwendbaren Zerkleinerungsapparatur.

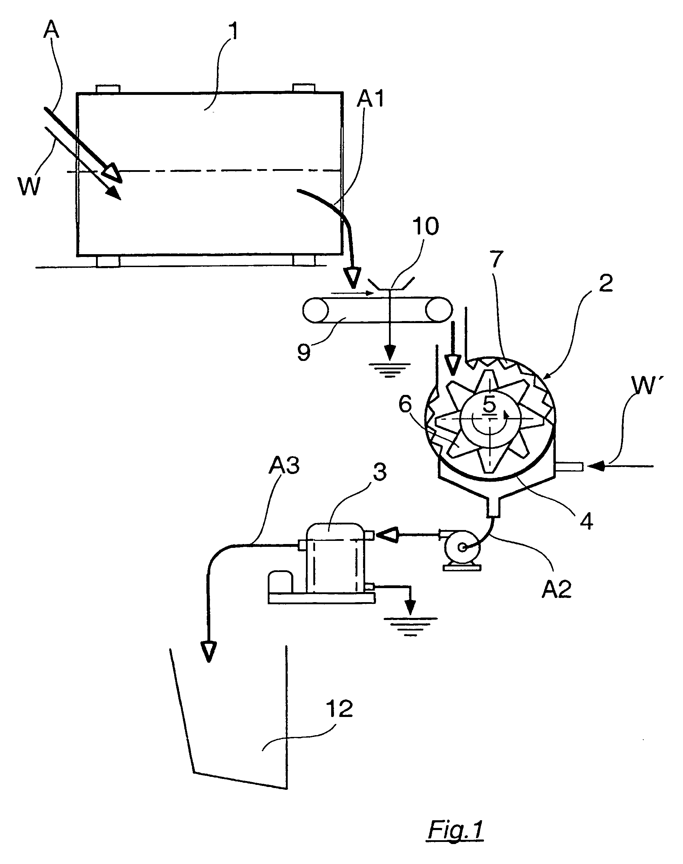

In dem Beispiel, das die Fig. 1 zeigt, wird das Altpapier A zusammen mit Wasser W zunächst in eine rotierende Auflösetrommel 1 eingetragen und aufgelöst, so dass am Ende dieses Verfahrensschrittes ein breiartiger hochkonsistenter Feststoff A1 aus der Auflösetrommel 1 herausfällt. Dieser enthält nicht nur die Papier- und Kartonbestandteile des Altpapiers A, sondern auch einen großen Teil der darin ursprünglich enthaltenen Störstoffe. Da jedoch in dem so gebildeten Feststoff A1 ein Teil der groben Verunreinigungen bereits freigelegt ist, kann er, muss aber nicht, bereits an dieser Stelle entfernt werden. Hierzu ist bei diesem Anlagenbeispiel ein Förderband 9 mit einer Grobteilentferung 10 angedeutet. Bei Rohstoffen, deren grobe Verunreinigungen überwiegend aus Eisen bestehen, könnte eine Magnetabscheidung erfolgen. Es sind aber auch andere Metalldetektoren oder ballistische Trennverfahren denkbar. Der so eventuell vorgereinigte Feststoff gelangt anschließend in einen Apparat 2, der sowohl dem Zerkleinern, als auch dem Kalibrieren dient. Vorzugsweise kann hierzu ein Shredder verwendet werden mit einem Rotor 5, der mit Zerkleinerungselementen 6 bestückt ist, die wiederum mit feststehenden Prallstücken 7 zusammenwirken. Die Prallstücke 7 sind z.B. kubisch oder leistenförmig. Sie können ebenso wie die Zerkleinerungselemente 6 mit Schneidflächen versehen sein. Ihre Ausgestaltung kann an verschiedenen Stellen in diesem Apparat 2 unterschiedlich sein. Die gemeinsam mit dem Faserstoff eingetragenen Störstoffe werden hier so weit zerkleinert, dass sie ein am Boden des Apparates 2 angeordnetes Sieb 4 passieren und so in den Siebdurchlauf A2 gelangen. Um eine pumpfähige Suspension zu erhalten, wird weiteres Wasser W' zugegeben, z.B. in den unteren Teil des Apparates 2. Der Siebdurchlauf A2 wird nun als pumpfähige Suspension in einer Feinsortierung 3 sehr effektiv von Störstoffen befreit und als Durchlauf A3 der Feinsortierung 3 in eine Bütte 12 geleitet.

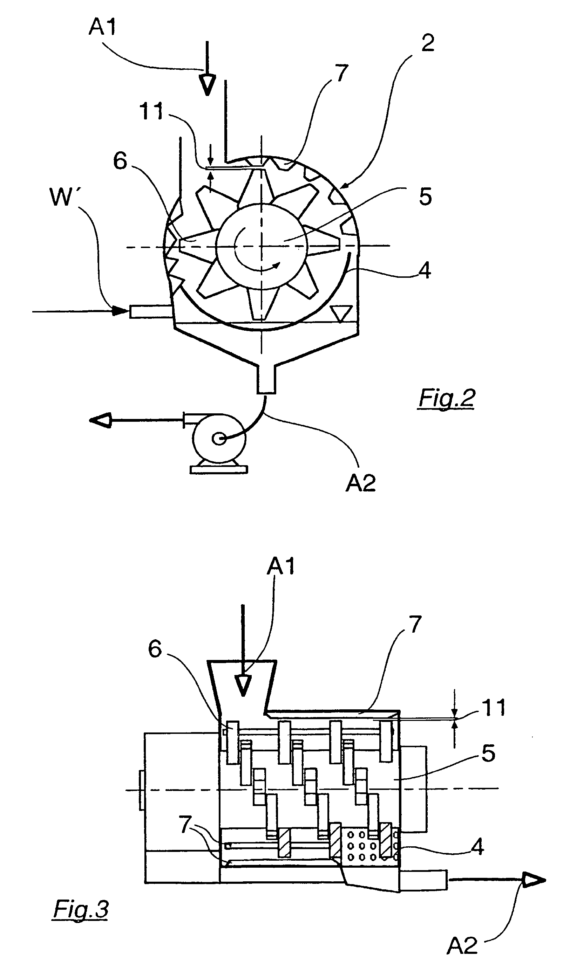

Der Apparat 2 kann seine Doppelfunktion bei Durchführung des erfindungsgemäßen Verfahrens besonders vorteilhaft erfüllen, wenn - wie die Fig. 2 etwas detaillierter zeigt - die Zerkleinerung im oberen Teil der Maschine und die Siebung im unteren Teil durchgeführt wird. Es könnte dann im unteren Teil, also dort, wo das Sieb 4 befestigt ist, ein Teilsumpf gebildet werden, der das Freihalten des Siebes und Durchspülen des aufgelösten Faserstoffes durch dieses Sieb erleichtert. Die Zerkleinerungselemente 6 bewegen sich in einem Abstand 11 von mindestens 3 mm an den Prallstücken 7 vorbei. Es kann von Vorteil sein, diesen Abstand 11 verstellbar zu machen, um die Zerkleinerungswirkung zu beeinflussen. Die Abstandseinstellung bietet auch eine Regelmöglichkeit für den Apparat 2, z.B. um Überlastung zu verhindern.

Gemäß Fig. 3 kann auch eine axiale Trennung der Funktionsbereiche dieser Apparatur 2 vorgenommen werden. Dabei ist dann der Siebbereich an dem dem Eintrag axial gegenüberliegenden Ende in den Apparat vorzusehen. Der Vorteil dieser Anordnung liegt darin, dass die etwas stärker verschleißanfälligen Siebe erst dann mit dem Störstoff in Kontakt kommen, wenn diese schon so weit zerkleinert sind, dass sie die Siebe passieren können.

## Patentansprüche

1. Verfahren zur Aufbereitung von störstoffhaltigem Altpapier (A) mit folgenden Schritten:
1.1 Benetzung des störstoffhaltigen Altpapiers (A) mit Wasser (W), bis der Feststoffgehalt auf einen Wert zwischen 10 und 30 % abgesenkt ist;
1.2 Auflösung des benetzten Altpapiers zu einem breiartigen Feststoff (A1);
1.3 anschließend Zerkleinerung und Kalibrierung des Feststoffes (A1) in einem weiteren Apparat (2), der ein Sieb (4) und mindestens einen mit Zerkleinerungselementen (6) versehenen Rotor (5) aufweist, die mit feststehenden Prallstücken (7) zusammenwirken, unter Bildung eines Siebdurchlaufes (A2), der sowohl die Papier- und Kartonanteile des Altpapiers, als auch den überwiegenden Teil der Störstoffe enthält;
1.4 Verdünnung des Siebdurchlaufes (A2) zu einer pumpfähigen Suspension;
1.5 Feinsortierung (3) dieser Suspension zur Entfernung von Störstoffen.

2. Verfahren nach Anspruch 1,
**dadurch gekennzeichnet,**
**dass** der Feststoffgehalt bei der Auflösung zwischen 10 und 18 % liegt.

3. Verfahren nach Anspruch 1 oder 2,
**dadurch gekennzeichnet,**
**dass** Benetzung und Auflösung in einer rotierenden Auflösetrommel (1) durchgeführt werden.

4. Verfahren nach Anspruch 1,
**dadurch gekennzeichnet,**
**dass** zwischen den Zerkleinerungselementen (6) und den Prallstücken (7) ein Abstand (11) eingestellt wird, der mindestens 0,5 mm beträgt.

5. Verfahren nach Anspruch 4,
**dadurch gekennzeichnet,**
**dass** zwischen den Zerkleinerungselementen (6) und den Prallstücken (7) ein Abstand (11) eingestellt wird, der mindestens 3 mm beträgt.

6. Verfahren nach Anspruch 1,
**dadurch gekennzeichnet,**
**dass** der Abstand (11) zwischen Zerkleinerungselementen (6) und den Prallstücken (7) durch einen Regler eingestellt wird.

7. Verfahren nach Anspruch 1, 4, 6 oder 6,
**dadurch gekennzeichnet,**
**dass** als Apparat (2) ein schneidender Shredder mit Kalibriersieb verwendet wird.

8. Verfahren nach einem der voranstehenden Ansprüche,
**dadurch gekennzeichnet,**
**dass** der angefallene Siebdurchlauf (A2) auf höchstens 2 % Feststoffgehalt verdünnt und die Feinsortierung (3) mit runden Sortieröffnungen durchgeführt wird, deren Durchmesser höchstens 2 mm betragen.

9. Verfahren nach einem der Ansprüche 1 bis 8,
**dadurch gekennzeichnet,**
**dass** die Feinsortierung (3) mit Schlitzsieb durchgeführt wird, dessen Schlitzweite höchstens 2 mm beträgt.

10. Verfahren nach Anspruch 9,
**dadurch gekennzeichnet,**
**dass** die Schlitzweite höchstens 0,6 mm beträgt.

11. Verfahren nach Anspruch 8, 9 oder 10,
**dadurch gekennzeichnet,**
**dass** vor der Feinsortierung (3) keine gröbere Sortierung des Siebdurchlaufes (A2) erfolgt.

12. Verfahren nach einem der voranstehenden Ansprüche,
**dadurch gekennzeichnet,**
**dass** die Kalibrierung im Apparat (2) bei einem Wassergehalt durchgeführt wird, der höher ist als der Wassergehalt des Feststoffes (A1) bei Eintritt in den Apparat (2).

13. Verfahren nach einem der voranstehenden Ansprüche,
**dadurch gekennzeichnet,**
**dass** der Siebdurchlauf (A2) mit Hilfe eines Siebes (4) gebildet wird, dessen Siebweite höchstens 30 mm beträgt.

14. Verfahren nach Anspruch 13,
**dadurch gekennzeichnet,**
**dass** die Siebweite höchstens 10 mm beträgt.

15. Verfahren nach einem der voranstehenden Ansprüche,
**dadurch gekennzeichnet,**
**dass** zur Bildung des Siebdurchlaufes (A2) ein im unteren Teil des Apparates (2) eingesetztes Sieb (4) verwendet wird.

16. Verfahren nach einem der voranstehenden Ansprüche,
**dadurch gekennzeichnet,**
**dass** ein Apparat (2) zur Zerkleinerung und Kalibrierung verwendet wird, der im oberen Teil eine Zerkleinerungszone und im unteren Teil eine Siebzone aufweist.

17. Verfahren nach einem der voranstehenden Ansprüche,
**dadurch gekennzeichnet,**
**dass** von dem Altpapier (A) vor der Auflösung Ballendrähte entfernt werden.

18. Verfahren nach einem der voranstehenden Ansprüche,
**dadurch gekennzeichnet,**
**dass** die Auflösung ohne Auflösechemikalien durchgeführt wird.

19. Verfahren nach einem der voranstehenden Ansprüche,
**dadurch gekennzeichnet,**
**dass** die Auflösung bei einem pH-Wert zwischen pH 5 und pH 9 durchgeführt wird.

20. Verfahren nach einem der voranstehenden Ansprüche,
**dadurch gekennzeichnet,**
**dass** zwischen der Benetzung mit Wasser und der Bildung des Siebdurchlaufes (A2) ein Zeitraum von mindestens 5 min. liegt.

21. Verfahren nach einem der voranstehenden Ansprüche,
**dadurch gekennzeichnet,**
**dass** durch die Feinsortierung (3) mindestens 50 % der bei der Auflösung im Altpapier enthaltenen Störstoffe entfernt werden.

22. Verfahren nach Anspruch 21,
**dadurch gekennzeichnet,**
**dass** der Störstoffgehalt im Durchlauf (A3) der Feinsortierung (3) maximal 0,1 Gew. % otro beträgt.

## Claims

1. A method for treating waste paper (A) containing anionic trash, comprising the following steps:
1.1 wetting the waste paper (A) containing anionic trash with water (W), until the solids content has dropped to a value of between 10 and 30%;
1.2 dissolving the wetted waste paper to form a pulpy solid (A1);
1.3 then comminuting and grading the solid (A1) in a further apparatus (2), comprising a screen (4) and at least one rotor (5) provided with comminuting elements (6), which cooperate with fixed impact elements (7), forming a screen pass fraction (A2) which contains both the paper and cardboard fractions of the waste paper and the predominant portion of the anionic trash;
1.4 diluting the screen pass fraction (A2) to form a pumpable suspension;
1.5 fine screening (3) of this suspension to remove anionic trash.

2. A method according to Claim 1,
**characterised in that**
the solids content in the dissolving stage is between 10 and 18%.

3. A method according to Claim 1 or 2,
**characterised in that**
the wetting and dissolving are carried out in a rotating dissolving drum (1).

4. A method according to Claim 1,
**characterised in that**
a distance (11) of at least 0.5 mm is set between the comminuting elements (6) and the impact elements (7).

5. A method according to Claim 4,
**characterised in that**
a distance (11) of at least 3 mm is set between the comminuting elements (6) and the impact elements (7).

6. A method according to Claim 1,
**characterised in that**
the distance (11) between the comminuting elements (6) and the impact elements (7) is set by a regulating means.

7. A method according to Claim 1, 4, 5 or 6,
**characterised in that**
a cutting shredder with grading screen is used as apparatus (2).

8. A method according to one of the preceding claims,
**characterised in that**
the screen pass fraction (A2) produced is diluted to at most 2% solids content and the fine screening (3) is carried out with round screening openings, the diameters of which are at most 2 mm.

9. A method according to one of Claims 1 to 8,
**characterised in that**
the fine screening (3) is carried out with a slot screen, the slot width of which is at most 2 mm.

10. A method according to Claim 9,
**characterised in that**
the slot width is at most 0.6 mm.

11. A method according to Claim 8, 9 or 10,
**characterised in that**
no coarser screening of the screen pass fraction (A2) takes place before the fine screening (3).

12. A method according to one of the preceding claims,
**characterised in that**
the grading in the apparatus (2) is carried out at a water content which is higher than the water content of the solid (A1) upon entry into the apparatus (2).

13. A method according to one of the preceding claims,
**characterised in that**
the screen pass fraction (A2) is formed with the aid of a screen (4), the screen size of which is at most 30 mm.

14. A method according to Claim 13,
**characterised in that**
the screen size is at most 10 mm.

15. A method according to one of the preceding claims,
**characterised in that**
a screen (4) inserted into the lower part of the apparatus (2) is used to form the screen pass fraction (A2).

16. A method according to one of the preceding claims,
**characterised in that**
an apparatus (2) which has in its upper part a comminution zone and in the lower part a screen zone is used for comminution and grading.

17. A method according to one of the preceding claims,
**characterised in that**
pieces of baling wire are removed from the waste paper (A) before dissolving.

18. A method according to one of the preceding claims,
**characterised in that**
the dissolving is carried out without dissolving chemicals.

19. A method according to one of the preceding claims,
**characterised in that**
the dissolving is carried out at a pH value of between pH 5 and pH 9.

20. A method according to one of the preceding claims,
**characterised in that**
there is a period of at least 5 min. between the wetting with water and the formation of the screen pass fraction (A2).

21. A method according to one of the preceding claims,
**characterised in that**
at least 50% of the anionic trash contained in the waste paper on dissolving is removed by the fine screening (3).

22. A method according to Claim 21,
**characterised in that**
the anionic trash content in the pass fraction (A3) of the fine screening stage (3) is at most 0.1% by weight oven-dry.

## Revendications

1. Procédé destiné au traitement de vieux papiers (A) contenant des impuretés, comportant les phases suivantes :
1.1 mouillage des vieux papiers (A) contenant des impuretés avec de l'eau (W) jusqu'à ce que la teneur en matières solides soit réduite à une valeur comprise entre 10 et 30 % ;
1.2 dissolution des vieux papiers mouillés en une matière solide (A1) pâteuse ;
1.3 déchiquetage et calibrage consécutifs de la matière solide (A1) dans un autre appareil (2), comportant un crible (4) et au moins un rotor (5) équipé d'éléments de déchiquetage (6), qui agissent conjointement avec des éléments d'impact (7) fixes, en engendrant un passant (A2) de crible qui contient, non seulement les composés de papier et de carton des vieux papiers, mais également une majeure partie des impuretés ;
1.4 dilution du passant (A2) de crible en une suspension susceptible d'être pompée ;
1.5 tri fin (3) de cette suspension pour l'élimination d'impuretés.

2. Procédé selon la revendication 1,
**caractérisé en ce que**,
lors de la dissolution, la teneur en matières solides est située entre 10 et 18 %.

3. Procédé selon la revendication 1 ou 2,
**caractérisé en ce que**
le mouillage et la dissolution sont effectués dans un tambour de dissolution (1) rotatif.

4. Procédé selon la revendication 1,
**caractérisé en ce que**
un écartement (11) est réglé entre les éléments de déchiquetage (6) et les éléments d'impact (7), qui est d'au moins 0,5 mm.

5. Procédé selon la revendication 4,
**caractérisé en ce que**
un écartement (11) est réglé entre les éléments de déchiquetage (6) et les éléments d'impact (7), qui est d'au moins 3 mm.

6. Procédé selon la revendication 1,
**caractérisé en ce que**
l'écartement (11) entre les éléments de déchiquetage (6) et les éléments d'impact (7) est réglé par un régulateur.

7. Procédé selon la revendication 1, 4, 6 ou 6,
**caractérisé en ce que**
une déchiqueteuse coupante avec un crible de calibrage est utilisée en tant qu'appareil (2).

8. Procédé selon l'une des revendications précédentes,
**caractérisé en ce que**
le passant (A2) de crible est dilué à une teneur en matières solides de 2 % maximum, et **en ce que** le tri fin (3) est effectué avec des orifices de tri ronds d'un diamètre maximal de 2 mm.

9. Procédé selon l'une des revendications 1 à 8,
**caractérisé en ce que**
le tri fin (3) est effectué avec un crible à fentes d'une largeur de fentes de 2 mm maximum.

10. Procédé selon la revendication 9,
**caractérisé en ce que**
la largeur de fentes est de 0,6 mm maximum.

11. Procédé selon la revendication 8, 9 ou 10,
**caractérisé en ce que**,
avant le tri fin (3), il n'est pas effectué de tri plus grossier du passant (A2) de crible.

12. Procédé selon l'une des revendications précédentes,
**caractérisé en ce que**
le calibrage est effectué dans l'appareil (2) avec une teneur en eau qui est supérieure à la teneur en eau de la matière solide (A1) à l'entrée dans l'appareil (2).

13. Procédé selon l'une des revendications précédentes,
**caractérisé en ce que**
le passant (A2) de crible est engendré à l'aide d'un crible (4) dont la largeur de crible est de 30 mm maximum.

14. Procédé selon la revendication 13,
**caractérisé en ce que**
la largeur de crible est de 10 mm maximum.

15. Procédé selon l'une des revendications précédentes,
**caractérisé en ce que**
un crible (4) disposé dans la partie inférieure de l'appareil (2) est utilisé pour l'obtention du passant (A2) de crible.

16. Procédé selon l'une des revendications précédentes,
**caractérisé en ce que**
un appareil (2) est utilisé pour le déchiquetage et le calibrage, comportant dans la partie supérieure une zone de déchiquetage et dans la partie inférieure une zone de criblage.

17. Procédé selon l'une des revendications précédentes,
**caractérisé en ce que**,
avant la dissolution, des cerclages de balles sont retirés des vieux papiers (A).

18. Procédé selon l'une des revendications précédentes,
**caractérisé en ce que**
la dissolution est effectuée sans produits chimiques de dissolution.

19. Procédé selon l'une des revendications précédentes,
**caractérisé en ce que**
la dissolution est effectuée à une valeur de pH comprise entre un pH 5 et un pH 9.

20. Procédé selon l'une des revendications précédentes,
**caractérisé en ce que**
un intervalle de temps d'au moins 5 min se situe entre le mouillage avec de l'eau et la formation du passant (A2) de crible.

21. Procédé selon l'une des revendications précédentes,
**caractérisé en ce que**
au moins 50 % des impuretés contenues dans les vieux papiers sont éliminées par le tri fin (3).

22. Procédé selon la revendication 21,
**caractérisé en ce que**
la teneur en impuretés du passant (A3) du tri fin (3) est de 0,1 % maximum en poids séché en étuve.
